# EUROPÄISCHE PATENTSCHRIFT

(11) **EP 0 750 086 B1**
(45) Veröffentlichungstag und Bekanntmachung des Hinweises auf die Patenterteilung: **25.09.2002**
(21) Anmeldenummer: 96109901.7
(22) Anmeldetag: 20.06.1996
(51) Int. Cl.: E05B 49/00, H04L 9/32

(54) **Authentifizierungssystem**
Authentication system
Système d'authentification

(30) Priorität: 24.06.1995 DE 19523009
(43) Veröffentlichungstag der Anmeldung: 27.12.1996
(73) Patentinhaber: Delphi Automotive Systems Deutschland GmbH, D-42369 Wuppertal (DE)
(72) Erfinder: Konrad, Reimund, Dipl.-Ing., 51647 Gummersbach (DE); Spreng, Markus, Dipl.-Ing., 51588 Nümbrecht (DE)
(74) Vertreter: Cohausz & Florack

(56) Entgegenhaltungen:
- GB-A- 2 279 540
- GB-A- 2 282 687
- IEEE COMMUNICATIONS MAGAZINE, Bd. 29, Nr. 6, 1.Juni 1991, US, Seiten 42-48, XP000235724 KÖNIGS: "cryptographic identification methods for smart cards in the process of standardization"

## Beschreibung

Die Erfindung betrifft ein Verfahren und eine Vorrichtung zur Prüfung der Nutzungsberechtigung für Zugangskontrolleinrichtungen, insbesondere Schließeinrichtungen für Fahrzeuge, bei dem zwischen einer dauerenergieversorgten zugangsseitigen Steuereinrichtung und einer benutzerseitigen Schlüsseleinrichtung nach einem geheimen Schlüssel codierte Benutzercodeinformationen bidirektional ausgetauscht werden, wobei im Rahmen der Prüfung der Nutzungsberechtigung die Erfüllung einer vorbestimmten Bedingung (Vergleichsergebnis) geprüft wird.

Ein Verfahren bzw. eine Vorrichtung dieser Art kommt immer dann zum Einsatz, wenn es um die Überprüfung geht, ob eine bestimmte Person authorisiert ist, die Zugangskontrolleinrichtung zu passieren. Dies gilt sowohl für ortsfeste Zugangskontrolleinrichtungen, zu denen nur ein ausgewählter Personenkreis zutritt hat. Dies gilt aber auch für mobile Zugangseinrichtungen, insbesondere an Fahrzeugen wie Kraftfahrzeugen, Schiffen oder Fahrrädern. Durch das Vorsehen von Zugangskontrolleinrichtungen soll hier dem Diebstahl des Fahrzeugs entgegengewirkt werden. Die Vorrichtung setzt sich dabei zusammen aus den beiden Grundkomponenten, zum einen der innerhalb der Zugangskontrolleinrichtung angeordneten Steuereinrichtung, welche dauerhaft mit Energie versorgt ist, und zum anderen der mobilen Schlüsseleinrichtung, die den authorisierten Benutzer identifizieren soll. Die Schlüsseleinrichtung kann dabei selbst Teil eines Fahrzeugschlüssels sein, welcher mit der Steuereinrichtung im Bereich der Schließanlage des Fahrzeuges in bidirektionalem Datenaustausch steht. Es kann sich aber auch um eine Chipkarte handeln, mittels der der Datenaustausch mit der Steuereinrichtung galvanisch gekoppelt erfolgt.

Verfahren bzw. Vorrichtungen zur Prüfung der Nutzungsberechtigung sind aus der Praxis im Anwendungsbereich für Fahrzeuge bekannt. Im einfachsten Fall handelt es sich um ein elektromagnetisches Identifizierungssystem bestehend aus einem im Zündschlüssel integrierten passiven Datenträger in Form eines Transponders, sowie einer am Zündschloß angebrachten Antennenspule, die mit der Steuereinrichtung verbunden ist. Ein solches System wird in der Regel über den Zündkontakt des Fahrzeuges aktiviert, wodurch das Steuergerät ein magnetisches Wechselfeld aussendet. Dieses regt den Datenträger im Transponder zum Aussenden seiner festabgespeicherten Dateninformation an. Die vom Steuergerät empfangenen Daten werden wiederum demoduliert und in der Steuereinrichtung mit einer in einer Schüsseltabelle abgelegten Vorgabeinformation verglichen. Nur im Falle einer Übereinstimmung kann das Fahrzeug gestartet werden.

Eine weitere Vorrichtung bzw. Verfahren zur Prüfung der Nutzungsberechtigung für Fahrzeuge ist das aus der Praxis ebenfalls bekannte sogenannte "challenge and response Verfahren". Hierbei sendet die Steuereinrichtung zunächst an die Schlüsseleinrichtung eine beliebige Dateninformation. Diese wird in der Schlüsseleinrichtung mit einem geheimen Schlüssel unter Verwendung einer Verschlüsselungsfunktion verschlüsselt. Die verschlüsselte Information wird an die Steuereinrichtung zurückgesendet. Die Steuereinrichtung wendet nun auf die empfangene Nachricht die Inversfunktion zur Verschlüsselungsfunktion in Verbindung mit dem geheimen Schlüssel an. Die dadurch erzeugte Information wird in der Steuereinrichtung verglichen mit der ursprünglich erzeugten Ausgangsfunktion. Wenn eine Übereinstimmung vorliegt, wird die Nutzungsberechtigung als gegeben angesehen. Ein Nachteil dieses Verfahrens ist darin zu sehen, daß die an sich geheime Verschlüsselungsfunktion der Schlüsseleinrichtung dadurch festgestellt werden kann, daß die Schlüsseleinrichtung von einem entsprechenden Manipulationsgerät häufig mit einer beliebigen Zahlenfolge angeregt wird und die von der Schlüsseleinrichtung erzeugte Information erfaßt und aufgezeichnet wird. Durch das mehrmalige zyklische Erzeugen von Zufallsnachrichten kann sowohl der geheime Schlüssel der Schlüsseleinrichtung als auch die Verschlüsselungsfunktion ermittelt werden. Eine Verbesserung der Sicherheit einer solchen Vorrichtung bzw. eines solchen Verfahrens ist nur graduell dadurch möglich, daß eine Verschlüsselungsfunktion bzw. ein geheimer Schlüssel mit einer sehr langen Zahlenfolge verwendet werden. Dies erhöht jedoch den erforderlichen Aufwand beträchtlich.

Neben diesem aus der Praxis bekannten Stand der Technik sind aus der DE 32 34 539 A1 bzw. der DE 33 13 098 C1 Vorrichtungen bzw. Verfahren zur Prüfung der Nutzungsberechtigung für Fahrzeuge bekannt, bei denen schlüsselseitig bzw. fahrzeugseitig nach jeder erfolgreichen Durchführung der Nutzungsberechtigungsprüfung jeweils eine neue, zufällig ausgewählte oder deterministisch festgelegte berechtigende Codeinformation für die nachfolgende Prüfung erzeugt wird.

Aus der DE 32 25 754 A1 ist ein Verfahren zur Prüfung der Nutzungsberechtigung für Schließanlagen bekannt, bei welchem auf einen schlüsselseitig ausgelösten Startimpuls hin zunächst Zufallszahlen generiert und zu Schloß- bzw. Schlüsselseite hin übermittelt werden, anschließend schlüssel- und schloßseitig unabhängig voneinander mit beidseitig übereinstimmenden Zufallszahlen jeweils entsprechende Rechenoperationen ausgeführt werden und jeweils ein bestimmtes Teilstück des Resultats der Rechenoperation auf die Gegenseite übertragen wird, mit dem entsprechenden Teilstück des dort vorliegenden Resultats verglichen und im Fall der Übereinstimmung ein Freigabeimpuls abgegeben wird.

Aus der Druckschrift GB-A-2 279 540 ist ein Authentifizierungs- und Verschlüsselungs-Freigabesystem bekannt, mit welchem die Berechtigung eines Benutzers zum Zugriff auf ein Netzwerk überprüft wird. Die Prüfung der Nutzungsberechtigung sieht vor, daß zwischen einer netzwerkseitigen Steuereinrichtung und einer benutzerseitigen Einrichtung nach einem geheimen Schlüssel codierte Informationen bidirektional ausgetauscht werden. Bei dem Verfahren wird eine Zahlenfolge netzwerkseitig erzeugt und verschlüsselt als Information übertragen und dort invers verschlüsselt. Bei dem Verfahren wird ferner in der benutzerseitigen Einrichtung eine zweite Zufallszahlenfolge erzeugt und von dort unverschlüsselt an die netzwerkseitige Steuereinrichtung übertragen. Sie wird dort mit der ersten Zufallszahlenfolge kombiniert, zusammen mit dieser verschlüsselt und als Teil der Information wiederum an die benutzerseitige Schlüsseleinrichtung übertragen. Im Rahmen der bereits erwähnten inversen Verschlüsselung der Information werden die darin enthaltenen Zufallszahlenfolgen jeweils als Zahlenfolgen bereitgestellt. In der Schlüsseleinrichtung findet nachfolgend ein Vergleich der Zahlenfolge mit der ursprünglichen benutzerseitig erzeugten Zufallszahlenfolge statt und erst bei Feststellen einer Übereinstimmung dieser beiden Zahlenfolgen wird die Prüfung der Nutzungsberechtigung weiter fortgeführt. Anderenfalls wird sie abgebrochen.

Für den Fall, daß die genannte Bedingung erfüllt ist, ist vorgesehen, die entschlüsselte Information mit einer dritten benutzerseitig in der Schlüsseleinrichtung erzeugten Zufallszahl zu kombinieren, zu verschlüsseln und als Information an die zugangsseitige Steuereinrichtung im Netzwerk zu übertragen. Im Netzwerk wiederum erfolgt eine inverse Verschlüsselung der Information und eine Aufspaltung der invers verschlüsselten Information in Informationsteile. Es wird weiterhin netzwerkseitig geprüft, ob die gewonnene Information erwartungsgemäß mit der, wie oben beschrieben, netzwerkseitig erzeugten Zufallszahlenfolge übereinstimmt. Nur wenn auch diese Bedingung erfüllt ist, erfolgt letztendlich eine Akzeptanz des Benutzers durch das Netzwerk.

Ausgehend von diesem Stand der Technik ist es die Aufgabe der vorliegenden Erfindung, eine Vorrichtung und ein Verfahren der eingangs genannten Art in der Weise weiterzubilden, daß die benutzerseitig im Rahmen der Prüfung der Nutzungsberechtigung durchgeführte Prüfung des Vorliegens einer bestimmten Bedingung vereinfacht wird.

Diese Aufgabe wird erfindungsgemäß durch die Gegenstände der unabhängigen Patentansprüche 1 und 3 gelöst.

Insbesondere wird die Aufgabe dadurch gelöst, daß die Zufallszahlenfolge Rnd nicht nur verschlüsselt als Information Ca, sondern auch unverschlüsselt von der Steuereinrichtung an die Schlüsseleinrichtung übertragen wird. Dort erfolgt eine inverse Verschlüsselung der Information Ca in die Information Z.

Eine weitere Fortführung der Prüfung der Nutzungsberechtigung wird nun davon abhängig gemacht, ob die Information Z mit der ursprünglich in der Steuereinrichtung erzeugten Zufallszahlenfolge Rnd identisch ist. Nur wenn diese Bedingung erfüllt ist, wird die Prüfung der Nutzungsberechtigung für den Benutzer weiter fortgesetzt. Anderenfalls wird sie abgebrochen.

Erst wenn die Prüfung innerhalb der Schlüsseleinrichtung das Ergebnis hervorgebracht hat, daß eine Übereinstimmung vorliegt, schließt sich der eigentliche Nutzungsberechtigungsprüfungsvorgang nach dem an sich bekannten "challenge and response Verfahren" an. Hierzu wird schlüsselseitig eine kodierte Dateninformation ausgegeben, diese mit der hierzu inversen Verschlüsselungsfunktion in der Steuereinrichtung dekodiert und mit der ursprünglichen Zufallszahlenfolge verglichen. Wenn diesbezüglich eine Übereinstimmung vorliegt, erfolgt die Freigabe der Zugangskontrolleinrichtung. Die erfindungsgemäße Lösung zeichnet sich also dadurch aus, daß dem von der Schlüsseleinrichtung aus imitiertem "challenge and response Verfahren" eine zusätzliche Prüfung vorgeschaltet ist, so daß die Schlüsseleinrichtung selbst gegen Manipulationen geschützt ist.

Bevorzugte Ausführungsformen der Erfindung gehen aus den Unteransprüchen hervor.

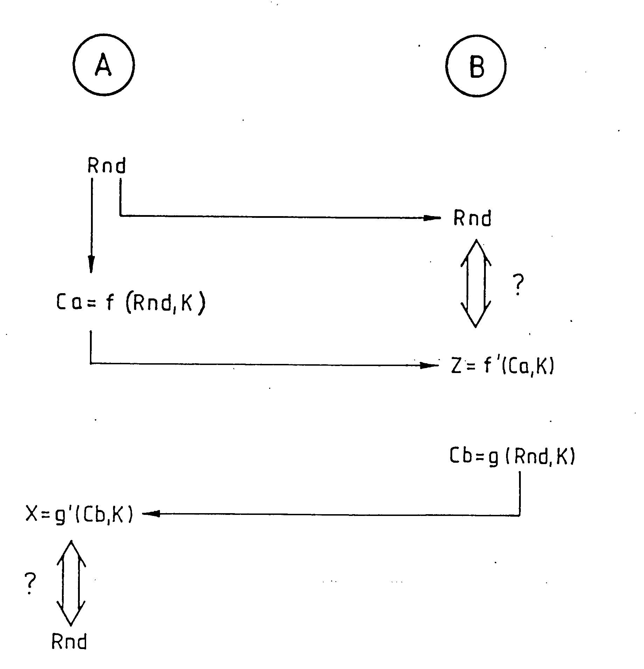

Die Erfindung wird im folgenden anhand eines Ausführungsbeispiels in Verbindung mit der Skizze nach der Figur näher erläutert:

Das System zur Prüfung der Nutzungsberechtigung ist gemäß Ausführungsbeispiel für den Einsatz in einer Wegfahrsperre für Kraftfahrzeuge ausgelegt. Die Vorrichtung besteht aus der im Bereich des Kraftfahrzeuges angeordneten Steuereinrichtung A und der im des Zündschlüssel vorgesehenen Schlüsseleinrichtung B.

Zu Beginn der Nutzungsberechtigungsprüfung wird in der ständig von der Autobatterie versorgten Steuereinrichtung A eine Zufallszahlenfolge Rnd generiert. Diese wird unverschlüsselt auf die Schlüsseleinrichtung B übertragen. Anschließend wird unter Anwendung des in der Steuereinrichtung A hinterlegten geheimen Codes K sowie der in der Steuereinrichtung abgespeicherten Verschlüsselungsfunktion f eine verschlüsselte Information Ca erzeugt, die ebenfalls zur Schlüsseleinrichtung B übertragen wird. Innerhalb der Schlüsseleinrichtung B wird nun auf die empfangene Information Ca die inverse Verschlüsselungsfunktion f' angewendet, die in der Schlüsseleinrichtung B hinterlegt ist, wiederum unter Benutzung des auch in der Schlüsseleinrichtung B hinterlegten geheimen Schlüssels K.

Anschließend werden beide Nachrichten miteinander verglichen, nämlich die Zufallszahlenfolge Rnd im nicht verschlüsselten Zustand sowie die inverse verschlüsselte Information Z.

Liegt eine Übereinstimmung beider Nachrichten vor, ist gewährleistet, daß eine Berechtigung vorliegt, da nur dann die inverse Information mit der ursprünglichen unkodierten Zufallszahlenfolge Rnd übereinstimmt, wenn diese zuvor in der Steuereinrichtung A mit der Verschlüsselungsfunktion f kodiert wurde.

Im Falle einer Abweichung beider Nachrichten, wird die Verschlüsselungseinrichtung in ihren Grundzustand zurückgesetzt, ohne daß Informationen gesendet werden. Hierdurch wird der Prüfungsvorgang abgebrochen, ohne daß der Unberechtigte die Möglichkeit an weiteren Manipulationen an der Schlüsseleinrichtung erhält.

Falls eine Übereinstimmung der miteinander verglichenen Nachrichten vorliegt, wendet die Schlüsseleinrichung B auf die Zufallszahlenfolge Rnd unter Berücksichtigung des geheimen Codes K die weitere Verschlüsselungsfunktion g an, die ebenfalls in der Verschlüsselungseinrichtung B abgespeichert ist. Diese mit Cb bezeichnete Information wird im folgenden an die Steuereinrichtung A übermittelt, welche hierauf die inverse Verschlüsselungsfunktion g' in Verbindung mit dem geheimen Schlüssel K anwendet.

Wenn dann die hieraus gewonnene Nachricht X wiederum der ursprünglichen Zufallszahlenfolge Rnd entspricht, ist die Nutzungsberechtigung nachgewiesen, so daß die entsprechenden Fahrzeugkomponenten freigegeben werden.

In weiteren, nicht dargestellten Ausführungsbeispielen läßt sich das erfindungsgemäße Verfahren bzw. die erfindungsgemäße Vorrichtung auch auf andere Arten von Zugangskontrolleinrichtungen anwenden, beispielsweise sogenannte Keylessentry-Systeme, bei denen anstelle eines Schlüssels eine Codekarte verwendet wird.

## Patentansprüche

1. Verfahren zur Prüfung der Nutzungsberechtigung für eine Zugangskontrolleinrichtung, insbesondere eine Schließeinrichtung für Fahrzeuge, bei dem zwischen einer dauerenergieversorgten zugangsseitigen Steuereinrichtung (A) und einer benutzerseitigen Schlüsseleinrichtung (B) nach einem geheimen Schlüssel (K) codierte Benutzercodeinformationen bidirektional ausgetauscht werden, mit folgenden Schritten:
a) in der Steuereinrichtung (A) wird eine Zufallszahlenfolge Rnd erzeugt;
b) die Zufallszahlenfolge Rnd wird zur Schlüsseleinrichtung (B) übertragen;
c) die Zufallszahlenfolge wird in der Steuereinrichtung (A) mittels einer ersten Verschlüsselungsfunktion f in eine Information Ca codiert;
d) die codierte Information Ca wird zur Schlüsseleinrichtung (B) übertragen;
e) die codierte Information Ca wird in der Schlüsseleinrichtung (B) mittels einer ersten inversen Verschlüsselungsfunktion f' in eine Information Z entschlüsselt;
f) die mittels der ersten inversen Verschlüsselungsfunktion f' entschlüsselte Information Z wird in der Schlüsseleinrichtung (B) mit der Zufallszahlenfolge Rnd verglichen;
g1) im Falle einer festgestellten Nicht-Übereinstimmung zwischen der Information Z und der Zufallszahlenfolge Rnd wird das Verfahren zur Prüfung der Nutzungsberechtigung nach Ausführung des Schrittes f) abgebrochen;
g2) nur im Falle einer festgestellten Übereinstimmung der mittels der ersten inversen Verschlüsselungsfunktion f' entschlüsselten Information Z mit der Zufallszahlenfolge Rnd wird in der Schlüsseleinrichtung (B) die Zufallszahlenfolge Rnd mit einer zweiten Verschlüsselungsfunktion g in eine Information Cb verschlüsselt und werden die nachfolgenden Schritte h) - k) ausgeführt;
h) die mit der zweiten Verschlüsselungsfunktion g verschlüsselte Information Cb wird zur Steuereinrichtung (A) übertragen;
i) die mit der zweiten Verschlüsselungsfunktion g verschlüsselte Information Cb wird in der Steuereinrichtung (A) mittels einer zweiten inversen Verschlüsselungsfunktion g' in eine Information X entschlüsselt;
j) die mittels der zweiten inversen Verschlüsselungsfunktion g' entschlüsselte Information X wird in der Steuereinrichtung (A) mit der Zufallszahlenfolge Rnd verglichen; und
k) bei einer Übereinstimmung der mittels der zweiten inversen Verschlüsselungsfunktion g' entschlüsselten Information X mit der Zufallszahlenfolge Rnd erfolgt eine Freigabe der Zugangskontrolleinrichtung.

2. Verfahren nach Anspruch 1,
**dadurch gekennzeichnet, daß** die Kopplung zwischen Steuereinrichtung (A) und Schlüsseleinrichtung (B) galvanisch oder kapazitiv erfolgt.

3. Vorrichtung zur Prüfung der Benutzerberechtigung für eine Zugangskontrolleinrichtung, insbesondere eine Schließeinrichtung für Fahrzeuge, mit einer dauerenergieversorgten zugangsseitigen Steuereinrichtung (A) und einer benutzerseitigen Schlüsseleinrichtung (B), zwischen denen nach einem geheimen Schlüssel (K) codierte Benutzercodeinformationen über Sende- und/oder Empfangsmittel bidirektional austauschbar sind, umfassend:
- einen Zufallszahlengenerator in der Steuereinrichtung (A) zur Erzeugung einer Zufallszahlenfolge Rnd; und
- eine erste in der Steuereinrichtung (A) angeordnete Verschlüsselungseinheit mit einer ersten Verschlüsselungsfunktion f zur Verschlüsselung der Zufallszahlenfolge Rnd zu einer Information Ca;
- eine erste, in der Schlüsseleinrichtung (B) angeordnete Entschlüsselungseinrichtung mit einer zur ersten Verschlüsselungsfunktion inversen Verschlüsselungsfunktion f' zur Erzeugung einer Information Z;
- eine erste, in der Schlüsseleinrichtung (B) angeordnete Vergleichereinrichtung zum Vergleich der Zufallszahlenfolge Rnd mit der nach der ersten Verschlüsselungsfunktion f' entschlüsselten Information Z;
- eine zweite, in der Schlüsseleinrichtung (B) angeordnete Verschlüsselungseinheit mit einer zweiten Verschlüsselungsfunktion g zur Verschlüsselung der Zufallszahlenfolge Rnd zu einer Information Cb;
- eine zweite, in der Steuereinrichtung (A) angeordnete Entschlüsselungseinrichtung mit einer zur zweiten Verschlüsselungsfunktion g inversen Verschlüsselungsfunktion g' zum Entschlüsseln der Information Cb nach ihrer Übermittlung von der Schlüsseleinrichtung (B) an die Steuereinrichtung (A) in eine Information X;
- eine zweite, in der Steuereinrichtung (A) angeordnete Vergleichereinrichtung zum Vergleichen der Zufallszahlenfolge Rnd mit der Information X; und
- Steuermittel zum Ansteuern der vorstehend genannten Komponenten in der Weise, daß die Verschlüsselung der Zufallszahlenfolge Rnd zu der Information Cb und die Übermittlung der Information Cb von der Schlüsseleinrichtung (B) an die Steuereinrichtung (A) nur im Falle einer in der Schlüsseleinrichtung festgestellten Übereinstimmung stattfindet.

4. Vorrichtung nach Anspruch 3,
**dadurch gekennzeichnet, daß** die Schlüsseleinrichtung (B) ein insbesondere als Transponder ausgebildeter Teil eines Fahrzeugschlüssels ist.

5. Vorrichtung nach Anspruch 3 oder 4,
**dadurch gekennzeichnet, daß** die Schlüsseleinrichtung (B) als Chipkarte ausgebildet ist.

## Claims

1. Method for checking the usage authorisation for an access control device, in particular a locking device for vehicles, in which between a control device (A) on the access side with a permanent energy supply and a key device (B) on the user side items of user code information encoded by a secret key (K) are exchanged bidirectionally by the following steps:
a) a random sequence of digits Rnd is generated in the control device (A);
b) the random sequence of digits Rnd is transmitted to the key device (B);
c) the random sequence of digits is encoded in the control device (A) into an item of information Ca by means of a first encryption function f;
d) the encoded information Ca is transmitted to the key device (B);
e) the encoded information Ca is decrypted in the key device (B) into an item of information Z by means of a first inverse encryption function f';
f) the information Z decrypted by means of the first inverse encryption function f' is compared in the control device (B) with the random sequence of digits Rnd;
g1) in the event that a mismatch between the information Z and the random sequence of digits Rnd is found the procedure for checking the usage authorisation is broken off after execution of step f);
g2) only in the event that a match is found between the information Z decrypted by means of the first inverse encryption function f' and the random sequence of digits Rnd is the random sequence of digits Rnd encrypted in the key device (B) into an item of information Cb using a second encryption function g and the following steps h) - k) are carried out;
h) the information Cb encrypted by the second encryption function g is transmitted to the control device (A);
i) the information Cb encrypted by the second encryption function g is decrypted in the control device (A) into an item of information X by means of a second inverse encryption function g';
j) the information X decrypted by means of the second inverse encryption function g' is compared in the control device (A) with the random sequence of digits Rnd; and
k) in the event of a match of the information X decrypted by means of the second inverse encryption function g' with the random sequence of digits Rnd release of the access control device ensues.

2. Method according to Claim 1, **characterized in that** the coupling between the control device (A) and the key device (B) ensues electrically or by means of capacitance.

3. Device for checking the usage authorisation for an access control device, in particular a locking device for vehicles, having a control device (A) on the access side with a permanent energy supply and a key device (B) on the user side between which items of user code information encoded by a secret key (K) are bidirectionally exchangeable via transmitting and/or receiving means comprising:
- a random number generator in the control device (A) for generating a random sequence of digits Rnd; and
- a first encryption unit arranged in the control device (A) having a first encryption function f for encrypting the random sequence of digits Rnd into an item of information Ca;
- a first decrypting device arranged in the key device (B) having an encryption function f' inverse to the first encryption function for generating an item of information Z;
- a first comparator device arranged in the key device (B) for comparing the random sequence of digits Rnd with the information Z decrypted by the first encryption function f';
- a second encryption unit arranged in the key device (B) having a second encryption function g for encrypting the random sequence of digits Rnd into an item of information Cb;
- a second decryption device arranged in the control device (A) having an encryption function g' inverse to the second encryption function g for decrypting the information Cb after its transmission from the key device (B) to the control device (A) into an item of information X;
- a second comparator device arranged in the control device (A) for comparing the random sequence of digits Rnd with the information X; and
- control means for addressing the aforesaid components in the fashion that the encryption of the random sequence of digits Rnd into the item of information Cb and the transmission of the information Cb from the key device (B) to the control device (A) takes place only in the event of a match being found in the key device.

4. Device according to Claim 3, **characterized in that** the key device (B) is a part of a vehicle key constructed in particular as a transponder.

5. Device according to Claim 3 or 4, **characterized in that** the key device (B) is constructed as a chip card.

## Revendications

1. Procédé pour contrôler l'autorisation d'usage pour un dispositif de contrôle d'accès, en particulier un dispositif de fermeture pour véhicules, dans lequel sont échangées en mode bidirectionnel des informations de code utilisateur codées selon un code secret (k) entre un dispositif de commande (A) côté accès alimenté en énergie en permanence et un dispositif à code (B) côté utilisateur, avec les étapes suivantes :
a) dans le dispositif de commande (A) est produite une séquence de nombres aléatoires Rnd;
b) la séquence de nombres aléatoires Rnd est transférée au dispositif à code (B);
c) la séquence de nombres aléatoires est codée dans le dispositif de commande (A) au moyen d'une première fonction de codage f en une information Ca;
d) l'information codée Ca est transmise au dispositif à code (B);
e) l'information codée Ca est décodée dans le dispositif à code (B) en une information Z au moyen d'une première fonction de codage inverse f';
f) l'information Z décodée au moyen de la première fonction de codage inverse f' est comparée à la séquence de nombres aléatoires Rnd dans le dispositif à code (B);
g1) dans le cas d'une non-coïncidence établie entre l'information Z et la séquence de nombres aléatoires Rnd, le procédé de contrôle de l'autorisation d'usage selon la version de l'étape f) est interrompu;
g2) ce n'est que dans le cas d'une coïncidence établie de l'information Z décodée au moyen de la première fonction de codage inverse f avec la séquence de nombres aléatoires Rnd que, dans le dispositif à code (B), la séquence de nombres aléatoires Rnd est codée par une deuxième fonction de codage g en une information Cb et que les étapes successives h) - k) sont réalisées;
h) l'information Cb codée avec la deuxième fonction de codage g est transférée au dispositif de commande (A);
i) l'information Cb codée par la deuxième fonction de codage g est décodée dans le dispositif de commande (A) en une information X au moyen d'une deuxième fonction de codage inverse g';
j) l'information X décodée au moyen de la deuxième fonction de codage inverse g' est comparée à la séquence Rnd de nombres aléatoires dans le dispositif de commande (A); et
k) lors d'une coïncidence de l'information X décodée au moyen de la deuxième fonction de codage inverse g' avec la séquence de nombres aléatoires Rnd, il se produit une libération du dispositif de contrôle d'accès.

2. Procédé selon la revendication 1, **caractérisé en ce que** le couplage entre le dispositif de commande (A) et le dispositif à clé (B) se fait de façon galvanique ou capacitive.

3. Dispositif pour le contrôle de l'autorisation d'usage pour un dispositif de contrôle d'accès, en particulier un dispositif de fermeture pour véhicules, avec un dispositif de commande (A) côté accès alimenté en énergie en permanence et un dispositif à code côté utilisateur (B), entre lesquels des informations de code utilisateur codées selon un code secret (A) peuvent être échangées en mode bidirectionnel via des moyens d'émission et/ou de réception, comprenant :
- un générateur de nombres aléatoires dans le dispositif de commande (A) pour produire une séquence de nombres aléatoires Rnd; et
- une première unité de codage aménagée dans le dispositif de commande (A) avec une première fonction de codage f pour coder la séquence de nombres aléatoires Rnd en une information Ca;
- un premier dispositif de décodage aménagé dans le dispositif à code (B) avec une fonction de codage inverse à la première fonction de codage f' pour produire une information Z;
- un premier dispositif de comparaison aménagé dans le dispositif à code (B) pour comparer la séquence de nombres aléatoires Rnd à l'information Z décodée selon la première fonction de codage f';
- une deuxième unité de codage aménagée dans le dispositif à code (B) avec une deuxième fonction de codage g pour coder la séquence de nombres aléatoires Rnd en une information Cb;
- un deuxième dispositif de décodage aménagé dans le dispositif de commande (A) avec une fonction de codage g' inverse de la deuxième fonction de codage g pour décoder l'information Cb après sa transmission du dispositif à clé (B) au dispositif de commande (A) en une information X;
- un deuxième dispositif de comparaison aménagé dans le dispositif de commande (A) pour comparer la séquence de nombres aléatoires Rnd avec l'information X; et
- des moyens de commande pour commander les composants mentionnés ci-dessus de manière que le codage de la séquence de nombres aléatoires Rnd en information Cb et le transfert de l'information Cb du dispositif à code (B) au dispositif de commande (A) ne se fasse que dans le cas d'une coïncidence établie dans le dispositif à clé.

4. Dispositif selon la revendication 3, **caractérisé en ce que** le dispositif à code (B) fait partie d'une clé de véhicule automobile conformé en particulier en transpondeur.

5. Dispositif selon la revendication 3 ou 4, **caractérisé en ce que** le dispositif à code (B) se présente sous la forme d'une carte à puce.
